(19) **Europäisches Patentamt**
**European Patent Office**
**Office européen des brevets**

(11) **EP 2 203 319 B1**

(12) **FASCICULE DE BREVET EUROPEEN**

(45) Date de publication et mention
de la délivrance du brevet:
**23.10.2013 Bulletin 2013/43**

(21) Numéro de dépôt: **08844319.7**

(22) Date de dépôt: **23.10.2008**

(51) Int Cl.:
***B60C 23/04*** *(2006.01)*

(86) Numéro de dépôt international:
**PCT/FR2008/051915**

(87) Numéro de publication internationale:
**WO 2009/056740 (07.05.2009 Gazette 2009/19)**

(54) **ORGANE FORMANT UN SUPPORT POUR UN DISPOSITIF ET PNEUMATIQUE COMPRENANT UN TEL ORGANE**

STÜTZGLIED FÜR EINE VORRICHTUNG UND DER REIFEN MIT DIESEM STÜTZGLIED

MEMBER DEFINING A HOLDER FOR A DEVICE AND TYRE INCLUDING SUCH MEMBER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.10.2007 FR 0758522**

(43) Date de publication de la demande:
**07.07.2010 Bulletin 2010/27**

(73) Titulaires:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventeurs:
• **BATTOCCHIO, Claudio**
**B-63200 Riom (BE)**
• **CUBIZOLLE, Bernard**
**F-63118 Cebazat (FR)**

(74) Mandataire: **Dequire, Philippe Jean-Marie Denis**
**M.F.P. Michelin**
**23, place des Carmes-Déchaux**
**DGD/PI - F35 - Ladoux**
**63040 Clermont-Ferrand Cedex 09 (FR)**

(56) Documents cités:
**EP-A- 1 544 001         WO-A-2004/048132**
**US-A1- 2002 174 925**

**Description**

La présente invention concerne le domaine technique des pneumatiques pour véhicule automobile.

Plus précisément, l'invention concerne la fixation d'un dispositif notamment électronique, tel qu'un capteur de pression, sur un pneumatique. Le dispositif électronique est rigide et il est déconseillé de le fixer directement sur le pneumatique car cela risque de perturber le comportement mécanique du pneumatique en roulage, notamment lorsqu'il se déforme.

Il est donc connu dans l'état de la technique, en accord avec le préambule de la revendication 1, notamment d'après le document EP-A1-1 544 001, d'utiliser un organe en gomme collé à la surface du pneumatique et formant support pour le dispositif électronique. L'organe en gomme est parfois désigné sous le terme anglais « patch ».

Cet organe réalise une transition mécanique entre le dispositif rigide et le pneumatique souple de sorte que le dispositif ne perturbe pas le comportement du pneumatique. On parle parfois de découplage mécanique réalisé entre le dispositif électronique et le pneumatique.

L'invention a notamment pour but de proposer un organe qui permette une meilleure endurance de l'assemblage de l'organe sur la surface d'un pneumatique.

A cet effet, l'invention a pour objet un organe formant support pour un dispositif, comportant une partie de liaison avec un pneumatique et une partie de support d'un dispositif, la partie de liaison comportant une surface de liaison avec le pneumatique, une surface supérieure et un bord périphérique, caractérisé en ce que le bord périphérique est délimité par une surface de jonction entre les surfaces opposées supérieure et de liaison convergeant vers leur surface de jonction suivant un angle $\alpha$ compris entre 9 et 15 degrés.

De préférence, l'angle $\alpha$ est compris entre 10 et 12 degrés.

L'angle des bordures de l'organe est un paramètre important à prendre en considération pour que la fixation de l'organe au pneumatique soit durable. En effet, si cet angle est inférieur à 9 degrés, des replis peuvent apparaître en bordure de l'organe car il est difficile d'aplatir correctement son bord périphérique. On parle de festonnage. Si cet angle est supérieur à 15 degrés, le bord périphérique de l'organe est trop rigide si bien qu'il crée des contraintes trop fortes à la surface du pneumatique et provoque des cassures ou des décollements en roulage.

La surface de jonction du bord périphérique peut être sensiblement une ligne de jonction.

Alternativement, la surface de jonction du bord périphérique peut être une surface normale à la surface de liaison et présenter une hauteur comprise entre 0, 1 et 0, 2 mm.

Le bord périphérique peut aussi comporter, en plus, un cordon de section sensiblement rectangulaire de même épaisseur que la surface de jonction et s'étendant vers l'extérieur de 0 à 1,5 mm. Cette surface de liaison et ce cordon facilitent notamment l'éventation lors du moulage de l'organe.

L'organe peut comprendre en plus une couche de gomme de liaison disposée sur la surface de liaison sans déborder au droit du bord périphérique de l'organe.

L'organe est usuellement fabriqué par moulage suivi d'une vulcanisation. On pose ensuite sur la surface de liaison une couche de gomme de liaison non vulcanisée destinée à assurer la liaison entre la surface du pneumatique et la surface de liaison de l'organe. L'épaisseur de cette couche de gomme de liaison est de l'ordre de 0,3 mm. On réalise ensuite une découpe de l'ensemble organe et couche de gomme de liaison par exemple avec un emporte pièce. La surface de découpe de la gomme de liaison doit être exactement dans le prolongement de la surface de découpe du cordon de l'organe.

Cela permet d'éviter après assemblage sur la surface du pneumatique d'avoir une couche de gomme de liaison qui déborde de l'organe. Un tel débordement peut entraîner une diminution de la durée de vie de l'assemblage par oxydation de la gomme de liaison faisant saillie.

La présence du cordon augmente la marge de tolérance de l'opération de découpe de l'organe comprenant la gomme de liaison. Le risque de mordre sur la partie inclinée de la surface supérieure devient pratiquement nul.

L'invention a également pour objet un pneumatique qui comprend un organe tel que précédemment défini.

L'invention sera mieux comprise à la lecture de la description qui va suivre, donnée uniquement à titre d'exemple et faite en se référant aux dessins annexés dans lesquels :

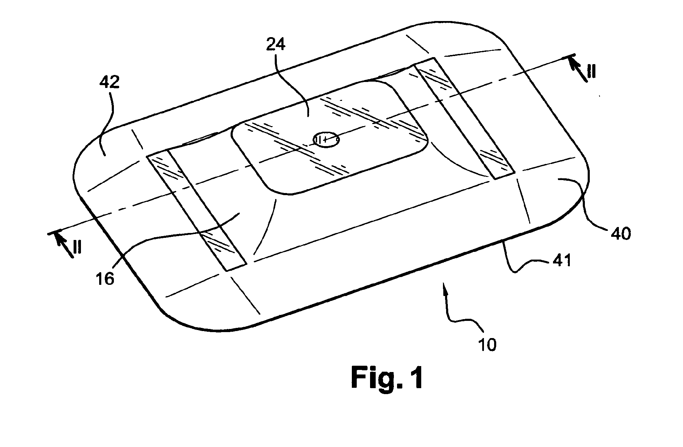

- la figure 1 est une vue en perspective d'un organe selon l'invention,
- la figure 2 est une vue en coupe de l'organe de la figure 1 suivant le plan II-II de la figure 1,
- la figure 3 est une vue en coupe de l'organe de la figure 1 lorsqu'il est rapporté sur un pneumatique et qu'il supporte un dispositif ; et
- les figures 4 à 6 sont des vues en coupe d'agrandissements de plusieurs modes de réalisation d'un bord périphérique d'un organe.

On entend par « module d'élasticité » d'une gomme ou mélange caoutchouteux, un module sécant d'extension à 10 % de déformation et à température ambiante ou spécifiée, la mesure est réalisée après un premier cycle d'accommodation jusqu'à 10 % de déformation :

$$E_{10} = \frac{F_{10}}{S \times \varepsilon_{10}} \quad \text{i.e.} \quad E_{10} = \frac{F_{10}(1+\varepsilon_{10})}{S_0 \times \varepsilon_{10}} \quad \text{et} \quad E_{10} = \frac{F_{10} \times 1.1}{S_0 \times 0.1}$$

dans laquelle $\varepsilon_{10}$ est égale à 0.1 ;

avec $E_{10}$ : module d'extension sécant à 10% de déformation ; $F_{10}$ : force d'extension à 10% d'extension ; $S_0$ : section initiale de l'éprouvette de test ; S : section de l'éprouvette de test à la déformation d'extension $\varepsilon$, dans le cas de matériau en caoutchouc, on sait que : $S = \dfrac{S_0}{1+\varepsilon}$ ; et $\varepsilon_{10}$ : déformation d'extension à 10%.

On a représenté sur les figures un exemple d'organe selon l'invention adapté pour un véhicule de tourisme. L'organe est désigné par la référence générale 10 et est destiné à être rapporté sur un pneumatique 12 et à former un support pour un dispositif 14. Ce dispositif 14 peut être de type varié, par exemple électronique (capteur de pression, capteur de température ...), mécanique ou autre.

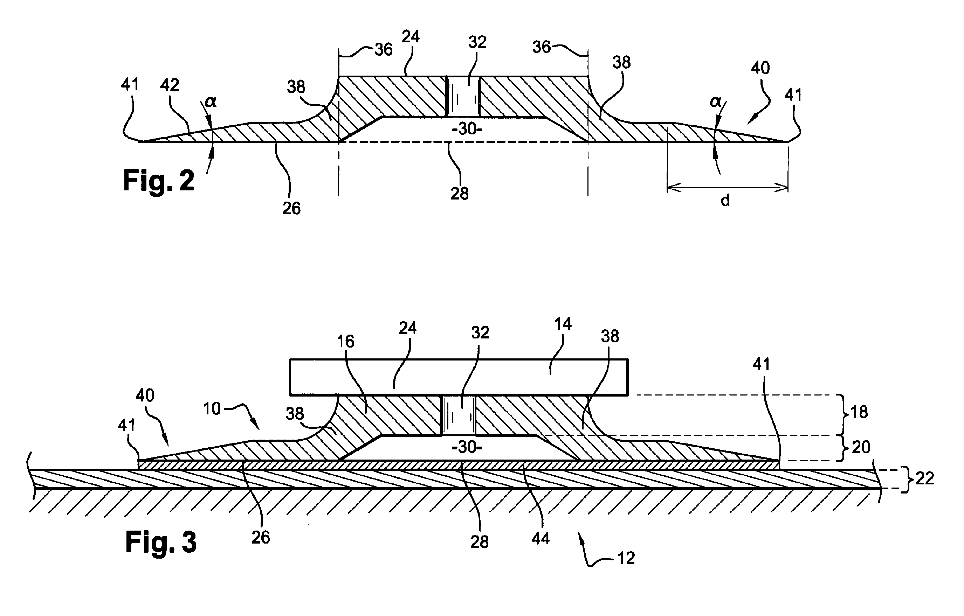

L'organe 10 comprend une masse 16 de gomme qui, comme représenté sur la figure 3, comprend une partie de support 18 de l'organe 14 et une partie de liaison 20 avec le pneumatique 12. Les parties 18 et 20 sont d'un seul tenant et leur séparation est imaginaire. La masse 16 de gomme est obtenue par moulage.

L'organe 10 est destiné à être rapporté sur une surface de préférence intérieure du pneumatique. Sur la figure 3, l'organe 10 est rapporté sur une gomme d'étanchéité intérieure 22 du pneumatique 12. La gomme intérieure 22 forme une partie de liaison complémentaire de la partie de liaison 20 de l'organe 10.

La masse de gomme 16 est délimitée par une surface de support 24 de l'organe 14, la surface 24 étant constituée par la surface supérieure de la partie de support 18. Les dimensions de la surface de support 24 sont d'environ 15 millimètres x 12 millimètres (mm). Le dispositif 14 porté par la surface de support peut avoir des dimensions supérieures à celles de la surface de support 24, comme représenté sur la figure 3.

La masse de gomme 16 est également délimitée par une surface de liaison 26 avec le pneumatique 12, opposée à la surface de support 24 et sensiblement parallèle à celle-ci. La surface de liaison 26 est constituée par la surface inférieure de la partie de liaison 20 de l'organe 10. Les dimensions de la surface de liaison 26 sont d'environ 40 mm x 32 mm.

Les deux surfaces 24 et 26 sont sensiblement planes et sont distantes l'une de l'autre d'environ 4 mm.

L'organe 10 comprend une ouverture 28 ménagée dans la surface de liaison 26 et délimitant un évidement 30 ménagé dans la masse 16. L'ouverture 28 est représentée en trait pointillé sur la figure 2. La profondeur de l'évidement 30 est d'environ 1,5 mm.

On notera que du fait de la présence de l'évidement 30 dans la masse 16, il existe au moins un plan imaginaire de section de la masse 16 sensiblement parallèle aux surfaces opposées 24 et 26 dans lequel la section de la masse 16 à une forme générale annulaire.

La masse 16 est conformée de sorte que la surface de support 24 s'étend au moins partiellement au droit de la surface de l'ouverture 28. En d'autres termes, la projection orthogonale de la surface 24 sur la surface de liaison 26 délimite la surface de l'ouverture 28.

Dans l'exemple représenté sur la figure 2, la projection orthogonale de la surface de support 24 sur la surface de liaison 26, symbolisée par des traits de projection 36, coïncide sensiblement avec l'ouverture 28.

Grâce à l'évidement 30, la partie de la masse 16 qui est située au droit de la surface de liaison 24, et qui est de ce fait rendue rigide par la présence du dispositif 14, n'est pas en contact avec la gomme intérieure 22 du pneumatique 12.

La partie de support 18 est reliée à la partie de liaison 20 par des ponts de matière 38 liés à la périphérie de la partie de support 18. Ces ponts de matière 38 ont une faible épaisseur, par exemple égale à 4 mm, de sorte qu'ils sont souples et qu'ils permettent un mouvement relatif des deux parties 18 et 20, notamment en cas de déformations du pneumatique 12 ou de vibrations du dispositif 14. Cela permet d'améliorer plus encore le découplage mécanique entre le pneumatique 12 et le dispositif 14.

La masse de gomme comprend en outre et de façon optionnelle un canal 32 ménagé dans la partie de support 18 de la masse 16 et débouchant d'un côté sur la surface de support 24 et de l'autre au fond de l'évidement 30. Ce canal permet de positionner correctement le dispositif 14 sur la surface de support 24. Il facilite également le collage de l'organe 10 sur le pneumatique en évitant l'emprisonnement d'air dans l'évidement 30. Enfin, il permet une communication fluidique entre l'évidement 30 et l'air intérieur du pneumatique en coopérant avec un canal similaire ménagé dans le dispositif. Ainsi des variations de pression ou de température du pneumatique ne provoquent pas de différences de pression entre l'intérieur du pneumatique et l'intérieur de l'évidement, sources de déformations de l'organe.

La gomme utilisée pour la fabrication de la partie de liaison 20 de la masse 16 est une gomme dont le module d'allongement à 10 % est au plus égal à celui du pneumatique 12. En d'autres termes, la partie de liaison 20 est plus souple que la gomme intérieure 22. A titre d'exemple, pour un module d'allongement à 10% de la gomme intérieure 22 du pneumatique égal à 2,2 MPa à 65°C, on choisira, pour fabriquer l'organe 10, une gomme dont le module d'allongement est au plus égal à 2,2 MPa à 65°C. Pour une bonne endurance de l'assemblage, il convient que le module de la gomme de l'organe respecte cette valeur limite dans toute la plage des températures du pneumatique en roulage, par exemple entre 0 et 80 degrés Celcius. La gomme utilisée peut être naturelle ou synthétique.

La partie de liaison 20 de l'organe 10 comprend un bord périphérique 40 délimité par la ligne de jonction 41 entre la surface de liaison 26 et une surface supérieure 42 de la partie de liaison 20. Pour des raisons de fabrication et notamment pour faciliter l'éventation lors du moulage, la ligne de jonction 41 peut ne pas être d'épaisseur nulle mais présenter une épaisseur faible, de l'ordre de 0,1 à 0,2 mm. On parle alors dans ce cas de surface de jonction 41. Les deux surfaces 26 et 42 convergent vers la ligne de jonction 41 et font entre elles, à proximité de la ligne 41, un angle $\alpha$ compris entre 9 et 15°, de préférence entre 10 et 12°.

Comme représenté sur la figure 3, la solidarisation de l'organe 10 sur le pneumatique 12 est réalisée au moyen d'un matériau de liaison 44, intercalée entre la surface de liaison 26 de l'organe 10 et la gomme intérieure 22. Cette couche de liaison 44 s'étend tout du long de la surface de liaison 26 mais n'en déborde pas. En d'autres termes, la couche de liaison 44 affleure le bord périphérique 41.

De préférence, l'angle $\alpha$ entre les deux surfaces 26 et 42 est compris entre 10 et 12 degrés dans une zone du bord périphérique 40 s'étendant jusqu'à une distance d d'environ 7 mm de la ligne de jonction 41.

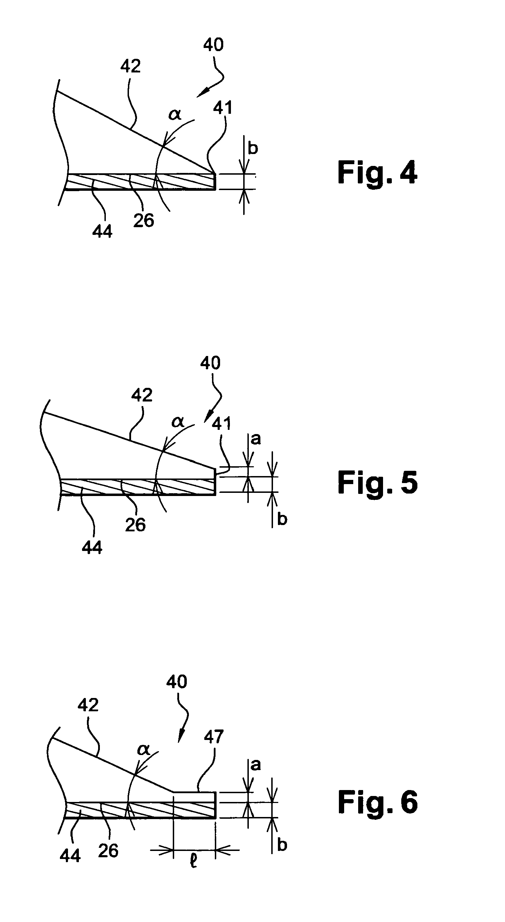

Les figures 4 à 6 présentent en coupe des agrandissements de trois modes de réalisation du bord périphérique 40.

A la figure 4, les deux surfaces 26 et 42 se rejoignent jusqu'à former une ligne de jonction 41, c'est-à-dire une surface de jonction 41 d'épaisseur nulle.

A la figure 5, le bord périphérique 40 est délimité par une surface de jonction 41 normale à la surface 26 et d'épaisseur a de l'ordre de 0,1 à 0,2 mm.

A la figure 6, le bord périphérique 40 comprend un cordon 47 de section rectangulaire et qui s'étend sur une distance / comprise entre 0 (comme sur la figure 5) et de l'ordre de 1,5 mm.

La présence de ce cordon 47 et de la surface de jonction 41 facilitent l'éventation des moules de fabrication des organes. On peut aussi utiliser des évents par exemple à d'autres endroits et conserver une géométrie telle qu'illustrée à la figure 4.

Aux figures 4 à 6 on voit aussi la couche 44 de gomme de liaison disposée contre la surface de liaison 26, d'épaisseur b de l'ordre de 0,3 mm. Cette couche de gomme de liaison se termine au bord périphérique sans dépasser du cordon ou de la surface ou de la ligne de jonction.

Enfin, l'invention ne se limite pas à l'exemple décrit ci- dessus puisqu'on peut par exemple prévoir toutes géométries pour les parties de support du dispositif, l'absence d'évidements dans la masse 16 ou une pluralité d'évidements dans la masse 16.

## Revendications

**1.** Organe (10) formant support pour un dispositif (14), comportant une partie de liaison (20) avec un pneumatique (12) et une partie de support (18) d'un dispositif (14), la partie de liaison (20) comportant une surface de liaison (26) avec le pneumatique, une surface supérieure (42) et un bord périphérique (40), **caractérisé en ce que** le bord périphérique (40) est délimité par une surface de jonction (41) entre les surfaces opposées supérieure (42) et de liaison (26) convergeant vers leur surface de jonction (41) suivant un angle ($\alpha$) compris entre 9 et 15 degrés.

**2.** Organe (10) selon la revendication 1, dans lequel l'angle ($\alpha$) est compris entre 10 et 12 degrés.

**3.** Organe (10) selon l'une quelconque des revendications 1 et 2, dans lequel la surface de jonction (41) du bord périphérique (40) est sensiblement une ligne de jonction.

**4.** Organe (10) selon l'une quelconque des revendications 1 et 2, dans lequel la surface de jonction (41) du bord périphérique (40) est normale à la surface de liaison (26) et a une hauteur comprise entre 0,1 et 0,2 mm.

**5.** Organe (10) selon la revendication 4, dans lequel le bord périphérique comporte en plus un cordon de section sensiblement rectangulaire de même épaisseur que la surface de jonction et s'étendant vers l'extérieur de 0 à 1,5 mm.

**6.** Organe (10) selon l'une quelconque des revendication précédentes, dans lequel l'organe comprend en plus une couche de gomme de liaison disposée sur la surface de liaison sans déborder au droit du bord périphérique de l'organe.

**7.** Pneumatique (12), **caractérisé en ce qu'**il comprend un organe (10) selon l'une quelconque des revendications précédentes.

**Patentansprüche**

**1.** Stützglied (10) für eine Vorrichtung (14), das einen Verbindungsteil (20) mit einem Reifen (12) und einen Stützteil (18) einer Vorrichtung (14) umfasst, wobei der Verbindungsteil (20) eine Verbindungsfläche (26) mit dem Reifen, eine obere Fläche (42) und einen Umfangsrand (40) umfasst, **dadurch gekennzeichnet, dass** der Umfangsrand (40) durch eine Anschlussfläche (41) zwischen der oberen Fläche (42) und der Verbindungsfläche (26), die sich gegenüberliegen und in einem Winkel ($\alpha$) zwischen 9 und 15 Grad zu ihrer Anschlussfläche (41) hin konvergieren, begrenzt ist.

**2.** Glied (10) nach Anspruch 1, wobei der Winkel ($\alpha$) zwischen 10 und 12 Grad beträgt.

**3.** Glied (10) nach Anspruch 1 oder 2, wobei die Anschlussfläche (41) des Umfangsrands (40) im Wesentlichen eine Anschlusslinie ist.

**4.** Glied (10) nach Anspruch 1 oder 2, wobei die Anschlussfläche (41) des Umfangsrands (40) zu der Verbindungsfläche (26) rechtwinklig ist und zwischen 0,1 und 0,2 mm hoch ist.

**5.** Glied (10) nach Anspruch 4, wobei der Umfangsrand ferner eine im Wesentlichen rechtwinklige Leiste mit derselben Dicke wie die Anschlussfläche umfasst, die sich 0 bis 1,5 mm nach außen erstreckt.

**6.** Glied (10) nach einem der vorhergehenden Ansprüche, wobei das Glied ferner eine Gummiverbindungsschicht umfasst, die ohne Überlappung auf der Verbindungsfläche und auf den Umfangsrand des Glieds ausgerichtet angeordnet ist.

**7.** Reifen (12), **dadurch gekennzeichnet, dass** er ein Glied (10) nach einem der vorhergehenden Ansprüche umfasst.

**Claims**

**1.** Member (10) forming a holder for a device (14), comprising a connecting portion (20) for connecting with a tyre (12) and a holding portion (18) for holding a device (14), the connecting portion (20) comprising a connecting surface (26) for connecting with the tyre, an upper surface (42) and a peripheral edge (40), **characterized in that** the peripheral edge (40) is delimited by a joining surface (41) between the mutually opposite upper surface (42) and connecting surface (26), converging on their joining surface (41) at an angle ($\alpha$) of between 9 and 15 degrees.

**2.** Member (10) according to Claim 1, in which the angle ($\alpha$) is between 10 and 12 degrees.

**3.** Member (10) according to either of Claims 1 and 2, in which the joining surface (41) of the peripheral edge (40) is substantially a joining line.

**4.** Member (10) according to either of Claims 1 and 2, in which the joining surface (41) of the peripheral edge (40) is normal to the connecting surface (26) and has a height of between 0.1 and 0.2 mm.

**5.** Member (10) according to Claim 4, in which the peripheral edge also comprises a cord of substantially rectangular section of the same thickness as the joining surface and extending outwards from 0 to 1.5 mm.

**6.** Member (10) according to any one of the preceding claims, in which the member also comprises a layer of connecting gum placed on the connecting surface without overlapping in line with the peripheral edge of the member.

**7.** Tyre (12), **characterized in that** it comprises a member (10) according to any one of the preceding claims.

**Fig. 1**

**Fig. 2**

**Fig. 3**

EP 2 203 319 B1

Fig. 4

Fig. 5

Fig. 6

EP 2 203 319 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1544001 A1

9